# EUROPÄISCHE PATENTSCHRIFT

(11) **EP 3 777 100 B1**
(45) Veröffentlichungstag und Bekanntmachung des Hinweises auf die Patenterteilung: **08.06.2022**
(21) Anmeldenummer: 19709012.9
(22) Anmeldetag: 04.03.2019
(51) Int. Cl.: H04L 65/40, H04W 4/40, H04W 4/80, H04W 72/12, H04L 67/61, H04L 67/12, H04W 72/10, H04W 84/18

(54) **ÜBERTRAGUNG VON DATEN MIT VERSCHIEDENEN PRIORITÄTEN ÜBER BLUETOOTH LOW ENERGY**
TRANSFER OF DATA WITH DIFFERENT PRIORITIES VIA BLUETOOTH LOW ENERGY
TRANSMISSION DE DONNÉES AVEC DIFFÉRENTES PRIORITÉS VIA BLUETOOTH BASSE ÉNERGIE

(30) Priorität: 03.05.2018 DE 102018206785
(43) Veröffentlichungstag der Anmeldung: 17.02.2021
(73) Patentinhaber: Audi AG, 85045 Ingolstadt (DE)
(72) Erfinder: THOMAS, Martin, 93336 Altmannstein (DE)
(74) Vertreter: Bauer, Dominik Michael
(86) Internationale Anmeldenummer: PCT/EP2019/055257
(87) Internationale Veröffentlichungsnummer: WO 2019/211024

(56) Entgegenhaltungen:
- US-A1- 2018 007 706
- Anonymous: "Bluetooth - Wikipedia", , 24 April 2018 (2018-04-24), XP055715982, Retrieved from the Internet: URL:https://de.wikipedia.org/w/index.php?t itle=Bluetooth&oldid=176835746 [retrieved on 2020-07-17]

## Beschreibung

Die Erfindung betrifft ein Verfahren zum Übertragen von Daten, bei dem ein peripheres Gerät und ein zentrales Gerät nach dem Bluetooth Low Energy-Standard drahtlos gekoppelt werden und ein Datenpaket innerhalb eines Übertragungsfensters eines Bluetooth Low Energy (BLE)-Datenkanals zwischen dem peripheren Gerät und dem zentralen Gerät übertragen wird.

Üblicherweise umfasst ein modernes Fahrzeug ein Bussystem und mehrere Funktionssysteme, wie beispielsweise Sicherheitssysteme und Komfortsysteme, welche an das Bussystem angeschlossen sind. Ferner umfasst das Fahrzeug zum Steuern der Funktionssysteme wenigstens ein Steuergerät, welches zu den Funktionssystemen korrespondierende Applikationen aufweist und gleichfalls an das Bussystem angeschlossen ist.

Zudem können moderne Fahrzeuge an das Bussystem angeschlossene Kommunikationsgeräte zum drahtlosen Übertragen von Daten, d. h. zur Datenübertragung mittels elektromagnetischer Wellen, umfassen. Ein solches Kommunikationsgerät kann beispielsweise eine Mobilfunkschnittstelle aufweisen, um einem Insassen des Fahrzeugs ein bequemes mobiles Telefonieren in der Fahrgastzelle des Fahrzeugs zu ermöglichen. Daneben kann das Kommunikationsgerät aber auch verwendet werden, um Daten an das Fahrzeug zu übermitteln. Wenn es sich bei diesen Daten um Steuerungsdaten zur unmittelbaren Weiterleitung an Funktionssysteme des Fahrzeugs handelt, geht die Datenübertragung mit einem hohen Sicherheitsrisiko für das Fahrzeug einher.

Zum Verringern dieses Risikos offenbart die DE 10 2015 016 334 A1 ein Dachantennenmodul und ein Verfahren zum drahtlosen Übertragen externer Steuerdaten an ein mit einem Bussystem eines Fahrzeugs angeschlossenes Funktionssystem des Fahrzeugs. Das Dachantennenmodul ist an das Bussystem des Fahrzeugs angeschlossen und weist eine Kommunikationssteuereinheit mit einem Filtermodul auf, welches konfiguriert ist, die übertragenen externen Steuerdaten zu prüfen und sie nur dann an das Funktionssystem zu übermitteln, wenn die externen Steuerdaten ein vorbestimmtes Sicherheitskriterium erfüllen.

Wenn die Mobilfunkschnittstelle daneben auch verwendet wird, um Aktualisierungen für in Steuergeräten installierte Applikationen von einem Server herunterzuladen, Betriebsparameter des Fahrzeugs zu einem stationären Empfänger zu übermitteln, sonstige Daten mit weiteren Fahrzeugen auszutauschen oder dergleichen, stellt sich die Aufgabe, eine durch eine Mobilfunkverbindung aktuell bereitgestellte Übertragungsbandbreite auf die unterschiedlichen Applikationen des Fahrzeugs zu verteilen.

Die DE 10 2014 200 226 A1 offenbart zu diesem Zweck eine Vorrichtung und ein Verfahren zum Steuern einer drahtlosen Übertragung von Daten zwischen einem zentralen Kommunikationsgerät eines Fahrzeugs und einer externen Kommunikationseinheit, wie einer Basisstation eines Mobilfunknetzes oder einem WLAN-Zugangspunkt. In dem Kommunikationsgerät ist ein Organisationsmodul vorgesehen, welches mehreren Applikationen des Fahrzeugs die von mehreren Verbindungsmodulen der Kommunikationseinheit bereitgestellten drahtlosen Verbindungskapazitäten bedarfsgerecht zuordnet. Dabei können bestimmte Parameter, wie eine aktuelle Bandbreite einer drahtlosen Verbindung, eine aktuelle Fehlerrate, eine aktuelle Latenzzeit sowie Übertragungskosten berücksichtigt werden.

Ein Kommunikationsgerät eines Fahrzeugs kann aber neben einer Mobilfunkschnittstelle weitere Schnittstellen für drahtlose Verbindungen, wie beispielsweise eine WLAN-Schnittstelle zum Übertragen von Daten zu einem stationären Zugangspunkt aufweisen. Wenn mehrere drahtlose Verbindungen zur Verfügung stehen, kann das zu übertragende Datenvolumen auf die jeweils zugeordneten Schnittstellen des Kommunikationsgeräts verteilt werden.

Mit einem ähnlich gelagerten Verteilungsproblem beschäftigt sich die DE 10 2016 013 517 A1. Sie offenbart ein Verfahren zum drahtlosen Übertragen von Daten zwischen mehreren Endgeräten und mehreren stationären Zugangspunkten, welche Teil eines lokalen Netzwerkes (LAN) sind und mehrere unterschiedliche Funkstandards (Radio Access Technology, RAT) unterstützen. Die stationären Zugangspunkte können WLAN-Zugangspunkten und Basisstationen eines Mobilfunknetzes umfassen. Bei dem Verfahren kommunizieren die stationären Zugangspunkte, um einen Parameter der drahtlosen Übertragung derart anzupassen, dass die drahtlos zu übertragenden Daten den Zugangspunkten entsprechend den verfügbaren Übertragungskapazitäten des jeweiligen Funkstandards zugeordnet werden.

Abgesehen von einer Mobilfunkschnittstelle und einer WLAN-Schnittstelle kann ein Kommunikationsgerät eines Fahrzeugs weiterhin eine Bluetooth-Schnittstelle umfassen. Der Bluetooth-Standard, insbesondere der Bluetooth Low Energy-Standard, definiert eine drahtlose Verbindung kurzer Reichweite zwischen einem zentralen Gerät (central) und einem peripheren Gerät (peripheral), welche mit einem relativ geringen Abstand zueinander angeordnet sind. Gängige mobile Endgeräte, wie beispielsweise Smartphones, umfassen gewöhnlich ebenfalls eine Bluetooth-Schnittstelle, weshalb der Bluetooth-Standard grundsätzlich in Betracht kommt, um mit einem mobilen Endgerät das Fahrzeug auf Sicht fernzusteuern, beispielsweise bei einem ferngesteuerten Ein- und Ausparken.

Für eine Datenübertragung nach dem Bluetooth Low Energy-Standard werden das periphere Gerät und das zentrale Gerät zunächst gekoppelt. Im Rahmen der Kopplung (pairing) werden von dem peripheren Gerät und dem zentralen Gerät zunächst ein Verbindungsintervall (connection interval) mit einer bestimmten Intervalllänge von beispielsweise 15 ms oder 30 ms sowie weitere Verbindungsparameter ausgehandelt. Je Verbindungsintervall findet eine Datenübertragung lediglich innerhalb eines relativ kurzen Übertragungsfensters (connection event) statt, das beispielsweise 2 ms dauern kann. Während jedes Übertragungsfensters übermitteln das zentrale Gerät und das periphere Gerät abwechselnd stets ein Datenpaket, wobei das zentrale Gerät beginnt. Auf diese Weise kann eine maximale Übertragungsbandbreite von ca. 0,3 Mb/s (Megabit pro Sekunde) erreicht werden. In der Praxis kann die Übertragungsbandbreite während einer BLE-Verbindung infolge physikalischer Gegebenheiten, wie einer veränderlichen Entfernung zwischen dem zentralen Gerät und dem peripheren Gerät, einem störenden Material auf der Verbindungsstrecke, einer Störstrahlung und dergleichen variieren. Entsprechend werden die Verbindungsparameter der BLE-Verbindung von den beteiligten Geräten dynamisch angepasst, wodurch der Datendurchsatz eines BLE-Datenkanals schwanken kann.

Der Bluetooth-Low-Energy-Standard ist allerdings für eine ereignisbasierte Datenübertragung zwischen dem peripheren Gerät und dem zentralen Gerät vorgesehen. Entsprechend können während einer Datenübertragung auftretende Latenzzeiten relativ lang sein, so dass eine Übertragung zyklischer und/oder deterministischer Daten nach dem Bluetooth Low Energy-Standard ausgeschlossen ist. Mit anderen Worten lassen sich zeitkritische Daten nicht zuverlässig zeitnah übertragen, weshalb standardgemäß beispielsweise ein ferngesteuertes Ein- und Ausparken eines Fahrzeugs mittels eines mobilen Endgeräts nicht sicher möglich ist.

US 2018/0007706 A1 offenbart eine Vorrichtung zum prioritätsgesteuerten Übertragen von Sensordaten eines Fahrzeugs zunächst über einen BLE-Datenkanal zu einem mobilen Endgerät und dann von dem mobilen Endgerät über eine Mobilfunkverbindung zu einem Server.

Der Erfindung liegt daher die Aufgabe zugrunde, ein Verfahren anzugeben, welches die beschriebenen Nachteile vermeidet und ein sicheres Übertragen zeitkritischer Daten auf der Grundlage des Bluetooth Low Energy-Standards gewährleistet.

Gegenstand der Erfindung ist ein Verfahren zum Übertragen von Daten, bei dem ein peripheres Gerät und ein zentrales Gerät nach dem Bluetooth Low Energy-Standard (Bluetooth 4.0/4.1/4.2) drahtlos gekoppelt werden, ein Datenpaket innerhalb eines Übertragungsfensters eines Bluetooth Low Energy-Datenkanals zwischen dem peripheren Gerät und dem zentralen Gerät übertragen wird. Das Verfahren dient also der Datenübertragung nach dem BLE-Standard zwischen dem zentralen Gerät, welches als ein mobiles Endgerät, beispielsweise als ein Mobiltelefon, oder ein stationäres Endgerät, beispielsweise ein Datenverarbeitungsgerät oder Kommunikationsgerät, ausgebildet sein kann und jeweils ein standardkonformes BLE-Modul umfasst, und dem peripheren Gerät, welches als ein Kommunikationsgerät eines Fahrzeugs, insbesondere Kraftfahrzeugs und bevorzugt Autos, ausgebildet sein kann.

Wie vorstehend beschrieben, werden im Rahmen der Kopplung (pairing) zwischen den Geräten zunächst Verbindungsparameter (z.B. connection interval) ausgehandelt, aufgrund derer auch ein Übertragungsfenster (connection event) bestimmt wird. Während eines Übertragungsfensters übertragen das periphere Gerät und das zentrale Gerät jeweils abwechselnd Datenpakete.

Bei dem erfindungsgemäßen Verfahren wird das Übertragen des Datenpakets von jeweils einer in dem peripheren Gerät und in dem zentralen Gerät installierten Applikation derart gesteuert, dass ein Datenpaket hoher Priorität mit einer geringeren Latenzzeit übertragen wird als ein Datenpaket niedriger Priorität. Anders gesagt, übernehmen auf den beteiligten Geräten installierte Applikationen das Steuern der Verbindung, insbesondere ein Priorisieren der Datenpakete und ein prioritätsabhängiges Übertragen der Datenpakete, da der BLE-Standard ein solches Merkmal nicht aufweist und entsprechend auch nicht für eine zeitkritische Datenübertragung ausgelegt ist. Der BLE-Datenkanal wird demnach nur als Übertragungsmedium genutzt, während wesentliche Steuerungsmerkmale von den Applikationen, d. h. applikativ, vorgesehen werden. Dank der prioritätsbasierten Übertragungssteuerung kann für Datenpakete hoher Priorität eine geringe vorbestimmte Latenzzeit eingehalten werden.

In einer bevorzugten Ausführungsform segmentiert jede Applikation zu übertragende Daten vor einem Versenden in mehrere Datenpakete (von dem Standard definierte Bluetooth Low Energy Messages) und ordnet jedem Datenpaket eine Priorität zu, insbesondere einem zeitkritischen Datenpaket eine hohe Priorität, und setzt jede Applikation aus den mehreren empfangenen Datenpaketen die übertragenen Daten zusammen. Auf diese Weise können Datenvolumina, welche größer sind als eine Übertragungseinheit nach dem BLE-Standard problemlos übertragen werden. Zeitkritischen Datenpaketen, d. h. Datenpaketen zyklischer und/oder deterministischer Daten wird von den Applikationen eine hohe Priorität zugeordnet. Entsprechend können zeitkritische Datenpakete bevorzugt übertragen werden, d. h. ein Übertragen von Datenpaketen niedriger Priorität erfolgt erst, wenn sämtliche zeitkritischen Datenpakete übertragen sind.

In einer besonders bevorzugten Ausführungsform wird ein Datenpaket hoher Priorität, insbesondere jedes Datenpaket hoher Priorität vor einem Datenpaket niedriger Priorität übertragen. Auf diese Weise muss das Datenpaket hoher Priorität und muss insbesondere kein Datenpaket hoher Priorität abwarten, dass ein Datenpaket niedriger Priorität übertragen ist. Während hier nur eine hohe Priorität und eine niedrige Priorität unterschieden werden, versteht der Fachmann, dass das vorgeschlagene Verfahren nicht auf zwei unterschiedliche Prioritäten beschränkt ist. Vielmehr können die hohe Priorität und die niedrige Priorität zwei beliebige unterschiedliche Prioritäten aus einer Mehrzahl unterschiedlicher Prioritäten sein. Anders gesagt, erlaubt das vorgeschlagene Verfahren ohne Weiteres eine differenzierte Priorisierung von zu übertragenden Datenpaketen. Eine derartige differenzierte Priorisierung kann bspw. gemäß einer Zuordnung der zu übertragenden Datenpakete zu einem Skalenwert einer Skala realisiert werden, wobei bspw. ein Datenpaket mit hoher Priorität einem hohen Skalenwert und ein Datenpaket mit niedriger Priorität einem demgegenüber niedrigen Skalenwert zugeordnet werden kann, wobei eine weitere Differenzierung durch entsprechende Anzahl von dazwischenliegenden Skalenwerten erreicht wird.

In weiteren bevorzugten Ausführungsformen verwalten die Applikationen wenigstens einen Übertragungssteuerungsparameter und übertragen insbesondere dessen Parameterwert mittels separater Übertragungssteuerungspakete hoher Priorität über den Bluetooth Low Energy-Datenkanal. Mittels des Übertragungssteuerungsparameters kann die Übertragung von Datenpaketen zwischen Geräten weiter verbessert werden. Wenn sich der Parameterwert des Übertragungssteuerungsparameters während einer Datenübertragung ändert und zum Synchronisieren der beiden Applikationen der Parameterwert über den BLE-Datenkanal übertragen werden muss, wird den Parameterwert enthaltenden Übertragungssteuerungspaketen eine hohe Priorität zugeordnet.

In einer Ausführungsform wird das Übertragen der Datenpakete mittels eines die Datenpakete durchzählenden applikativen Paketzählers mit einer Paketnummer als Parameterwert gesteuert. Jedem Datenpaket wird demnach eine Paketnummer zugeordnet. Die Paketnummer kann von den Applikationen zum Identifizieren eines bestimmten gesendeten oder empfangenen Datenpakets verwendet werden.

In weiteren Ausführungsformen wird ein Empfangen eines Datenpakets hoher Priorität durch Senden eines die Paketnummer des empfangenen Datenpakets umfassenden Bestätigungspakets hoher Priorität quittiert. Solche Bestätigungspakete bilden besondere Übertragungssteuerungspakete und geben dem Sender die Gewissheit, dass ein gesendetes Datenpaket vom Empfänger empfangen wurde. Auf diese Weise dient die Paketnummer als ein implizites Bestätigungsmittel innerhalb der Übertragungssteuerung. Zwar verringern die Bestätigungspakete die zum Übertragen von Datenpaketen verfügbare Bandbreite des BLE-Datenkanals. Jedoch können im BLE-Standard vorgesehene Bestätigungsnachrichten wegfallen. Abgesehen davon ist die zum Übertragen einer Paketnummer, die beispielsweise lediglich 4 Bits umfasst, erforderliche Bandbreite relativ gering.

In einer bevorzugten Ausführungsform wird ausgehend von dem empfangenen Bestätigungspaket eine Übertragungsdauer des Datenpakets hoher Priorität ermittelt. Wenn die beteiligten Geräte einen Zeitmesser umfassen, lässt sich dank der Bestätigungspakete anhand der bestätigten Paketnummer für jedes Datenpaket eine Übertragungsdauer als Zeitdifferenz zwischen dem Sendezeitpunkt des Datenpakets und dem Empfangszeitpunkt des Bestätigungspakets ermitteln.

Vorteilhafterweise wird ausgehend von der ermittelten Übertragungsdauer eine Anzahl von während des Übertragungsfensters übertragbaren Datenpaketen hoher Priorität berechnet. Ein Vergleich der Übertragungsdauer eines Datenpakets mit der Zeitspanne des Übertragungsfensters in Form einer Division ergibt die Anzahl von je Übertragungsfenster übertragbaren Datenpaketen. Wenn während eines Übertragungsfensters für Datenpakete hoher Priorität infolge eines höheren Datendurchsatzes des BLE-Datenkanals eine kürzere oder längere Übertragungsdauer als zuvor gemessen wird, kann die Anzahl der zur Übertragung während dieses Übertragungsfensters vorgesehenen Datenpakete noch während des Übertragungsfensters unmittelbar dynamisch angepasst, d.h. erhöht bzw. gesenkt, werden.

Es ist es auch möglich, durch Messen der in der Regel dynamischen Übertragungsdauer eines Datenpakets und/oder durch Berechnen einer Ist-Anzahl der Datenpakete, die während eines aktuellen Übertragungsfensters jeweils übertragen wird, einen in der Regel dynamischen Datendurchsatz aktuell zu ermitteln, der sich aufgrund der aktuellen Übertragungsbedingung ergibt und auch abhängig hiervon ändern kann. Die Übertragungsdauer kann für jedes Datenpaket gemessen werden.

Die Datenrate bzw. der Datendurchsatz der Bluetooth Datenverbindung hängt von jeweils herrschenden Übertragungsbedingungen, bspw. einem Abstand zwischen den Kommunikationspartnern und/oder einer aktuell herrschenden Umweltbedingung, ab.

Falls es nicht möglich sein sollte, während eines Übertragungsfensters alle Datenpakete, insbesondere alle hochpriorisierten Datenpakete bzw. Datenpakete hoher Priorität, zu übertragen, wird dem Master, der in der Regel auf dem zentralen Gerät installiert ist, welches als ein mobiles Endgerät, beispielsweise als ein Mobiltelefon, oder ein stationäres Endgerät, beispielsweise ein Datenverarbeitungsgerät oder Kommunikationsgerät, ausgebildet sein kann und jeweils ein standardkonformes BLE-Modul umfasst, ein entsprechender Hinweis bereitgestellt. Außerdem ist es dabei möglich, wenn von dem Slave, der in der Regel auf dem im Fahrzeug verorteten peripheren Gerät, welches als ein Kommunikationsgerät des Fahrzeugs ausgebildet sein kann, kein für eine Bewegung des Fahrzeugs notwendiges Datenpaket empfangen wird, dass ein Steuergerät zum Steuern der Bewegung des Fahrzeugs automatisch eine vorgegebene bzw. vorimplementierte Aktion auslöst, die bspw. auf einem bereits übertragenen und empfangenen Datenpaket beruht. In der Regel werden insbesondere niedrigpriorisierte Datenpakete bzw. Datenpakete niedriger Priorität, falls sie nicht übertragen werden können oder konnten, überschrieben, jedoch in der Regel nicht in einer Warteschleife für einen späteren Versand in einem zukünftigen Verbindungsintervall gesammelt bzw. gequeued. Falls es nicht möglich ist, ein hochpriorisiertes Datenpaket während eines Übertragungsfensters zu versenden, kann dieses hochpriorisierte Datenpaket zumindest vorübergehend gespeichert werden. Dabei wird ein Inhalt oder Wert eines Steuersignals und/oder eines Statussignals eines derartigen hochpriorisierten Datenpakets berücksichtigt. Falls ein derartiger Inhalt oder Wert zwischenzeitlich veraltet sein sollte, kann dieses hochpriorisierte Datenpaket gelöscht und durch ein neues hochpriorisiertes Datenpaket ersetzt werden, das ein Steuersignal und/oder Statussignal mit aktualisiertem Inhalt oder Wert aufweist. Dabei können Inhalte oder Werte von Steuersignalen und/oder Statussignalen berücksichtigt werden, die bereits in Datenpaketen übermittelt worden sind.

Durch Verwendung der beschriebenen prioritätsgesteuerten Versendesteuerung lassen sich sicherheitkritische (hochpriorisierte) zyklische Daten und unwichtige (niedrigpriorisierte) Daten über einen "schmalbandigen" BLE-Datenkanal mit dynamischen Datenraten mit einer geringen Latenz für hochpriorisierte Datenpakete und einer höheren Latenz für niedrigpriorisierte Datenpakete übertragen.

In einer Ausführungsform speichert jede Applikation jedes Datenpaket in einem applikativen Datenpuffer zwischen, so dass die Applikation auf jedes zwischengespeicherte Datenpaket vollen Zugriff hat. Während an die BLE-Module übergebene Datenpakete dem steuernden Zugriff der Applikationen entzogen sind, bleibt dieser bei auf ein Übertragen wartenden Datenpaketen in dem applikativen Datenpuffer erhalten. In einem Versende-Puffer der jeweiligen BLE-Module werden nur die zu versendenden Daten des nächsten Übertragungsfensters gespeichert bzw. gelagert.

Eine der beiden Applikationen fungiert als Master und die andere der beiden Applikationen als Slave, wobei insbesondere die in dem zentralen Gerät installierte Applikation als Master und die in dem peripheren Gerät installierte Applikation als Slave fungieren. Ein hierarchisches Zusammenwirken der beiden Applikationen bietet Vorteile bei der Verbindungssteuerung, da aufwendige Verhandlungen zwischen den beiden Applikationen unterbleiben. Grundsätzlich kann jede der beiden Applikationen die führende Rolle als Master einnehmen. Allerdings ist die Implementierung von Masterfunktionen vereinfacht, wenn diese in der Applikation des zentralen Geräts erfolgt.

Die als Master fungierende Applikation bestimmt, welche Anzahl von Datenpaketen hoher Priorität während eines jeweiligen Übertragungsfensters jeweils von dem peripheren Gerät und von dem zentralen Gerät übertragen werden, teilt dem peripheren Gerät die für das periphere Gerät bestimmte Anzahl mit einem Übertragungssteuerungspaket hoher Priorität mit, und berechnet die Übertragungsdauer von Datenpaketen hoher Priorität. Die Berechnung der Übertragungsdauer im Master kann nach jedem Empfang eines applikativen Paketzählers durch ein Übertragungssteuerungspaket stattfinden.

Eine weitere wesentliche Aufgabe der Master-Applikation besteht in der zeitlichen Aufteilung jedes Übertragungsfensters zwischen dem peripheren Gerät und dem zentralen Gerät bzw. zwischen Slave und Master. Dabei richtet sich die zeitliche Aufteilung nach dem zu einem jeweiligen Zeitpunkt vorliegenden jeweiligen Übertragungsbedarf an Datenpaketen hoher Priorität und der Übertragungsrichtung. Ein weiterer vorteilhafter Aspekt besteht darin, dass stets immer nur so viele Datenpakete an das jeweilige BLE-Modul übergeben werden, wie innerhalb des nächsten Übertragungsfensters übertragen werden können. Dadurch ist den BLE-Modulen die Verwaltung ihres Puffers erleichtert, was mit einer weiteren Verringerung der Latenzzeiten einhergehen kann.

Es versteht sich, dass die vorstehend genannten und die nachstehend noch zu erläuternden Merkmale nicht nur in der jeweils angegebenen Kombination, sondern auch bei Verwendung in Alleinstellung oder in anderen Kombinationen den Rahmen der vorliegenden Erfindung nicht verlassen.

Die Erfindung ist anhand einer Ausführungsform des Verfahrens in den Zeichnungen schematisch dargestellt und wird unter Bezugnahme auf die Zeichnungen weiter beschrieben. Es zeigt:

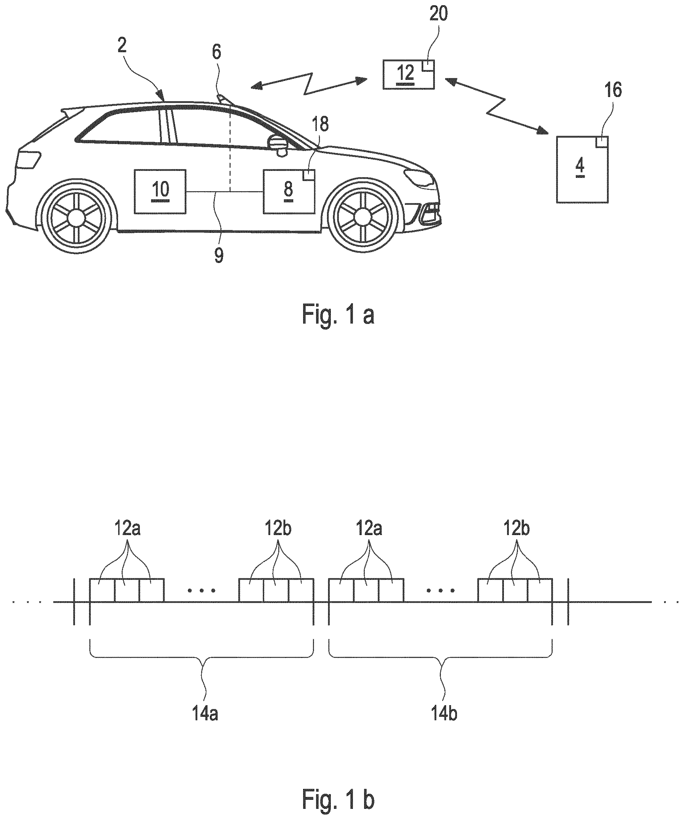

- Figur 1a: in einer schematischen Darstellung ein System zum Durchführen einer Ausführungsform des erfindungsgemäßen Verfahrens.
- Figur 1b: in einer schematischen Darstellung einen Zeitablauf einer Datenübertragung nach einer Ausführungsform des erfindungsgemäßen Verfahrens.

Figur 1a zeigt in einer schematischen Darstellung ein System zum Durchführen einer Ausführungsform des erfindungsgemäßen Verfahrens.

Das System umfasst ein Fahrzeug 2 mit einem als ein Steuergerät des Fahrzeugs 2 ausgebildeten peripheren Gerät 8 und einem als Mobiltelefon ausgebildeten zentralen Gerät 4, die jeweils ein BLE-Modul umfassen und nach dem Bluetooth Low Energy (BLE)-Standard gekoppelt sind. Das Fahrzeug 2 umfasst ferner eine als Dachantenne ausgebildete Antenne 6, ein Funktionssystem 10, welches ein oder mehrere Komfortsysteme und/oder Sicherheitssysteme symbolisiert, und ein Bussystem 9. Das periphere Gerät 8, das Funktionssystem 10 und die Antenne 6 sind an das Bussystem 9 angeschlossen. Alternativ kann auch die Antenne 6 in Form einer digitalen Dachantenne (DDA) als peripheres Gerät ausgebildet sein.

In dem peripheren Gerät 8 und in dem zentralen Gerät 4 ist jeweils eine Applikation 16, 18 zum Steuern der Übertragung von Daten installiert. Die in dem peripheren Gerät 8 installierte Applikation 18 fungiert als Slave, und die in dem zentralen Gerät 4 installierte Applikation 16 fungiert als Master. Die Funktionen der Applikationen 16, 18 können aber auch vertauscht sein.

Nach erfolgter Kopplung können zwischen dem peripheren Gerät 8 und dem zentralen Gerät 4 Datenpakete 12 über einen BLE-Datenkanal drahtlos ausgetauscht werden, der in der Figur 1a durch Doppelpfeile angedeutet ist.

Figur 1b zeigt in einer schematischen Darstellung einen Zeitablauf einer Datenübertragung nach einer Ausführungsform des erfindungsgemäßen Verfahrens. Die Zeitachse verläuft in der Darstellung horizontal von links nach rechts, d. h. ein erster Zeitpunkt links von einem zweiten Zeitpunkt liegt früher.

Bei der Kopplung (pairing) haben das periphere Gerät 8 und das zentrale Gerät 4 entsprechend dem BLE-Standard Verbindungsparameter, wie z.B. die Dauer eines Übertragungsintervalls (connection interval), ausgehandelt, die einen BLE-Datenkanal definieren, und somit ein Übertragungsfenster 14a, 14b (connection event) bestimmt.

Die Übertragungsintervalle und die Übertragungsfenster 14a, 14b sind in der Figur 1b allerdings nicht maßstabsgetreu dargestellt. In der Praxis sind die Übertragungsintervalle, d. h. im Wesentlichen die innerhalb der Übertragungsintervalle vorhandenen übertragungsfreien Lücken zwischen den Übertragungsfenstern, deutlich breiter als die Übertragungsfenster 14a, 14b.

Vor einem Versenden von Daten segmentiert jede Applikation 16, 18 die zu übertragenden Daten in mehrere Datenpakete 12, 12a, 12b (Bluetooth Low Energy Messages) und ordnet jedem Datenpaket 12, 12a, 12b eine Priorität zu. Dabei erhält ein zeitkritisches Datenpaket 12, 12a eine hohe Priorität. Nach dem Segmentieren speichert jede Applikation 16, 18 jedes Datenpaket 12, 12a, 12b in einem applikativen Datenpuffer zwischen, so dass die Applikation 16, 18 auf jedes zwischengespeicherte Datenpaket 12, 12a, 12b jederzeit vollen Zugriff hat. Dies bedeutet eine große Flexibilität bei der Auswahl und Übergabe zwischengespeicherter Datenpakete 12, 12a, 12b an das jeweilige BLE-Modul. Die jeweils andere Applikation 18, 16 setzt aus den mehreren empfangenen Datenpaketen 12, 12a, 12b die übertragenen Daten wieder zusammen.

Das Übertragen von Datenpaketen 12, 12a, 12b wird von den Applikationen 16, 18 derart gesteuert, dass ein Datenpaket 12, 12a hoher Priorität mit einer geringeren Latenzzeit übertragen wird als ein Datenpaket 12, 12b niedriger Priorität. Dazu werden innerhalb jedes Übertragungsfensters 14a, 14b Datenpakete 12, 12a hoher Priorität vor Datenpaketen 12, 12b niedriger Priorität, d. h. erstere früher als letztere, übertragen.

Dies wird rein applikativ erreicht, indem die Applikationen 16, 18 wenigstens einen Übertragungssteuerungsparameter verwalten und dessen Parameterwert mittels separater (nicht dargestellter) Übertragungssteuerungspakete hoher Priorität ebenfalls über den Bluetooth Low Energy-Datenkanal übertragen werden.

In der dargestellten Ausführungsform des Verfahrens wird das Übertragen der Datenpakete 12, 12a, 12b mittels eines die Datenpakete 12, 12a, 12b durchzählenden applikativen Paketzählers mit einer Paketnummer (n_ms) 20, die Teil der Datenpakete 12, 12a, 12b ist, als Parameterwert gesteuert und wird ein Empfangen eines Datenpakets 12, 12a hoher Priorität durch Rücksenden eines die Paketnummer 20 des empfangenen Datenpakets 12, 12a, 12b umfassenden (nicht dargestellten) Bestätigungspakets hoher Priorität quittiert. Die als Master fungierende Applikation 16 ermittelt ausgehend von dem empfangenen Bestätigungspaket eine Übertragungsdauer (t_msm) des Datenpakets 12, 12a hoher Priorität.

Ferner berechnet die als Master fungierende Applikation 16 ausgehend von der ermittelten Übertragungsdauer eine Anzahl von während des Übertragungsfensters übertragbaren Datenpaketen 12, 12a hoher Priorität. Zudem bestimmt die als Master fungierende Applikation 16, welche Anzahl von Datenpaketen 12, 12a hoher Priorität während eines nächsten Übertragungsfensters jeweils von dem zentralen Gerät 4 und von dem peripheren Gerät 8 übertragen werden können, und teilt dem peripheren Gerät 8 die für das periphere Gerät 8 maßgebliche Anzahl mit einem (nicht dargestellten) Übertragungssteuerungspaket hoher Priorität mit.

Ein interessanter Anwendungsfall des erfindungsgemäßen Verfahrens ist ein mittels eines mobilen Endgeräts ferngesteuertes Ein- und Ausparken eines Fahrzeugs (pilotiertes Parken). Zeitkritische Daten, wie beispielsweise solche zum Steuern einer Bewegung bzw. des Motorlaufs des Fahrzeugs, sowie sicherheitskritische Daten, wie Informationen betreffend ein Hindernis, werden bidirektional mit hoher Priorität zwischen dem Smartphone und dem Fahrzeug übertragen, während über denselben Low Energy Bluetooth-Datenkanal Informationen geringerer Relevanz, wie beispielsweise Videodaten einer Kamera oder Anzeigeinformationen zum graphischen Darstellen einer Trajektorie mit niedriger Priorität parallel übertragen werden.

Ein Vorteil des erfindungsgemäßen Verfahrens besteht darin, dass der weitverbreitete BLE-Standard verwendet werden kann, um zeitkritische Daten zwischen zwei Geräten bei zeitlich variabler Datenbandbreite zu übertragen. Entsprechend können weitverbreitete BLE-fähige mobile Endgeräte zum Fernsteuern von Fahrzeugen verwendet werden.

### BEZUGSZEICHENLISTE:

- 2: Fahrzeug
- 4: zentrales Gerät
- 6: Antenne
- 8: peripheres Gerät
- 9: Bussystem
- 10: Funktionssystem
- 12, 12a, 12b: Datenpaket
- 14a, 14b: Übertragungsfenster
- 16: Applikation, als Master fungierend
- 18: Applikation, als Slave fungierend
- 20: Paketnummer

## Patentansprüche

1. Verfahren zum Übertragen von Daten, bei dem ein peripheres Gerät (8) und ein zentrales Gerät (4) nach dem Bluetooth Low Energy-Standard drahtlos gekoppelt werden, mindestens ein Datenpaket (12, 12a, 12b) innerhalb eines Übertragungsfensters (14a, 14b) eines Bluetooth Low Energy-Datenkanals zwischen dem peripheren Gerät (8) und dem zentralen Gerät (4) übertragen wird, und bei dem das Übertragen des mindestens einen Datenpakets (12, 12a, 12b) von jeweils einer in dem peripheren Gerät (8) und in dem zentralen Gerät (8) installierten Applikation (16, 18) in einem hierarchischen Zusammenwirken derart gesteuert wird, dass ein Datenpaket (12, 12a) hoher Priorität mit einer geringeren Latenzzeit übertragen wird als ein Datenpaket (12, 12b) niedriger Priorität, wobei eine der beiden Applikationen (16) als Master fungiert und die andere der beiden Applikationen (18) als Slave fungiert und die als Master fungierende Applikation (16) bestimmt, welche Anzahl von Datenpaketen (12, 12a) hoher Priorität während des Übertragungsfensters (14a, 14b) jeweils von dem peripheren Gerät (8) und von dem zentralen Gerät (4) übertragen werden, und dem peripheren Gerät (8) die für das periphere Gerät (8) bestimmte Anzahl mit einem Übertragungssteuerungspaket hoher Priorität mitteilt.

2. Verfahren nach Anspruch 1, bei dem jede Applikation (16, 18) zu übertragende Daten vor einem Versenden in mehrere Datenpakete (12, 12a, 12b) segmentiert und jedem Datenpaket (12, 12a, 12b) eine Priorität zuordnet, insbesondere einem zeitkritischen Datenpaket (12, 12a) eine hohe Priorität, und bei dem jede Applikation (16, 18) aus den mehreren empfangenen Datenpaketen (12, 12a, 12b) die übertragenen Daten zusammensetzt.

3. Verfahren nach Anspruch 2, bei dem ein Datenpaket (12, 12a) hoher Priorität , insbesondere jedes Datenpaket (12, 12a) hoher Priorität vor einem Datenpaket (12, 12b) niedriger Priorität, insbesondere jedem Datenpaket (12, 12b) niedriger Priorität übertragen wird.

4. Verfahren nach einem der Ansprüche 1 bis 3, bei dem die Applikationen (16, 18) wenigstens einen Übertragungssteuerungsparameter verwalten und insbesondere dessen Parameterwert mittels separater Übertragungssteuerungspakete hoher Priorität über den Bluetooth Low Energy-Datenkanal übertragen werden.

5. Verfahren nach Anspruch 4, bei dem das Übertragen der Datenpakete (12, 12a, 12b) mittels eines die Datenpakete (12, 12a, 12b) durchzählenden applikativen Paketzählers mit einer Paketnummer (20) als Parameterwert gesteuert wird und insbesondere ein Empfangen eines Datenpakets (12, 12a) hoher Priorität durch Senden eines die Paketnummer (20) des empfangenen Datenpakets (12, 12a, 12b) umfassenden Bestätigungspakets hoher Priorität quittiert wird.

6. Verfahren nach Anspruch 5, bei dem ausgehend von dem empfangenen Bestätigungspaket eine Übertragungsdauer des Datenpakets (12, 12a) hoher Priorität ermittelt wird.

7. Verfahren nach Anspruch 6, bei dem ausgehend von der ermittelten Übertragungsdauer eine Anzahl von während des Übertragungsfensters (14a, 14b) übertragbaren Datenpaketen (12, 12a) hoher Priorität berechnet wird.

8. Verfahren nach einem der Ansprüche 1 bis 7, bei dem jede Applikation (16, 18) jedes Datenpaket (12, 12a, 12b) in einem applikativen Datenpuffer zwischenspeichert, so dass die Applikation (16, 18) auf jedes zwischengespeicherte Datenpaket (12, 12a, 12b) vollen Zugriff hat.

9. Verfahren nach einem der Ansprüche 1 bis 8, bei dem die in dem zentralen Gerät (4) installierte Applikation (16) als Master und die in dem peripheren Gerät (8) installierte Applikation (18) als Slave fungieren.

10. Verfahren nach einem der Ansprüche 1 bis 9, bei dem die als Master fungierende Applikation (16) die Übertragungsdauer von Datenpaketen (12, 12a) hoher Priorität berechnet.

## Claims

1. Method for transferring data, in which a peripheral device (8) and a central device (4) are wirelessly coupled using the Bluetooth Low Energy (BLE) standard, at least one data packet (12a, 12b) is transferred within a transfer window (14a, 14b) of a Bluetooth Low Energy data channel between the peripheral device (8) and the central device (4), and in which the transfer of the at least one data packet (12, 12a, 12b) is managed by an application (16, 18) installed in the peripheral device (8) and in the central device (8) in a hierarchical interaction such that a high-priority data packet (12, 12a) is transferred with a shorter latency period than a low-priority data packet (12, 12b), wherein one of the two applications (16) acts as a master and the other of the two applications (18) acts as a slave, and the application (16) acting as the master determines the number of high-priority data packets (12, 12a) transferred from the peripheral device (8) and from the central device (4) during the transfer window (14a, 14b), and notifies the peripheral device (8) of the number determined for the peripheral device (8) using a high-priority transfer control packet.

2. Method according to claim 1, in which each application (16, 18) segments data to be transferred into a plurality of data packets (12, 12a, 12b) before transmitting said data and assigns a priority to each data packet (12, 12a, 12b), in particular a high priority to a time-critical data packet (12, 12a), and in which each application (16, 18) assembles the transferred data from the plurality of received data packets (12, 12a, 12b).

3. Method according to claim 2, in which a high-priority data packet (12, 12a), in particular each high-priority data packet (12, 12a), is transferred before a low-priority data packet (12, 12b), in particular each low-priority data packet (12, 12b).

4. Method according to any of claims 1 to 3, in which the applications (16, 18) manage at least one transfer control parameter and, in particular, its parameter value is transferred via the Bluetooth Low Energy data channel using separate high-priority transfer control packets.

5. Method according to claim 4, in which the transfer of the data packets (12, 12a, 12b) is controlled by means of an applicative packet counter that counts the data packets (12, 12a, 12b) with a packet number (20) as the parameter value, and in particular a receipt of a high-priority data packet (12, 12a) is acknowledged by sending a high-priority confirmation packet comprising the packet number (20) of the received data packet (12, 12a, 12b).

6. Method according to claim 5, in which a transfer duration of the high-priority data packet (12, 12a) is determined based on the received confirmation packet.

7. Method according to claim 6, in which a number of high-priority data packets (12, 12a) transferable during the transfer window (14a, 14b) is calculated based on the determined transfer duration.

8. Method according to any of claims 1 to 7, in which each application (16, 18) temporarily stores each data packet (12, 12a, 12b) in an applicative data buffer such that the application (16, 18) has full access to each temporarily stored data packet (12, 12a, 12b).

9. Method according to any of claims 1 to 8, in which the application (16) installed in the central device (4) acts as the master and the application (18) installed in the peripheral device (8) acts as the slave.

10. Method according to any of claims 1 to 9, in which the application (16) acting as the master calculates the transfer duration of high-priority data packets (12, 12a).

## Revendications

1. Procédé de transmission de données, dans lequel un appareil périphérique (8) et un appareil central (4) sont couplés sans fil conformément à la norme Bluetooth à basse énergie, au moins un paquet de données (12, 12a, 12b) est transmis dans une fenêtre de transmission (14a, 14b) d'un canal de données Bluetooth à basse énergie entre l'appareil périphérique (8) et l'appareil central (4), et dans lequel la transmission du au moins un paquet de données (12, 12a, 12b) est commandée respectivement par une application (16, 18) installée dans l'appareil périphérique (8) et dans l'appareil central (8) dans une interaction hiérarchique, de sorte qu'un paquet de données (12, 12a) de priorité plus haute est transmis avec une latence plus faible qu'un paquet de données (12, 12b) de priorité plus faible, dans lequel l'une des deux applications (16) agit comme maître et l'autre des deux applications (18) agit comme esclave et l'application (16) agissant comme maître détermine le nombre de paquets de données (12, 12a) de priorité plus haute qui sont transmis pendant la fenêtre de transmission (14a, 14b) respectivement depuis l'appareil périphérique (8) et depuis l'appareil central (4), et communique à l'appareil périphérique (8) le nombre déterminé pour l'appareil périphérique (8) à l'aide d'un paquet de commande de transmission de priorité plus haute.

2. Procédé selon la revendication 1, dans lequel chaque application (16, 18) segmente des données à transmettre en une pluralité de paquets de données (12, 12a, 12b) avant leur envoi et associe une priorité à chaque paquet de données (12, 12a, 12b), en particulier une haute priorité à un paquet de données à temps critique (12, 12a), et dans lequel chaque application (16, 18) réunit les données transmises à partir de la pluralité de paquets de données reçus (12, 12a, 12b).

3. Procédé selon la revendication 2, dans lequel un paquet de données (12, 12a) de priorité plus haute, en particulier chaque paquet de données (12, 12a) de priorité plus haute, est transmis avant un paquet de données (12, 12b) de priorité plus faible, en particulier chaque paquet de données (12, 12b) de priorité plus faible.

4. Procédé selon l'une quelconque des revendications 1 à 3, dans lequel les applications (16, 18) gèrent au moins un paramètre de commande de transmission, et en particulier sa valeur de paramètre est transmise au moyen de paquets de commande de transmission de priorité plus haute séparés via le canal de données Bluetooth à basse énergie.

5. Procédé selon la revendication 4, dans lequel la transmission des paquets de données (12, 12a, 12b) est commandée au moyen d'un compteur de paquets d'application comptant les paquets de données (12, 12a, 12b) avec un numéro de paquet (20) comme valeur de paramètre, et en particulier une réception d'un paquet de données (12, 12a) de priorité plus haute est acquittée par l'envoi d'un paquet de confirmation de priorité plus haute comprenant le numéro de paquet (20) du paquet de données reçu (12, 12a, 12b).

6. Procédé selon la revendication 5, dans lequel une durée de transmission du paquet de données (12, 12a) de priorité plus haute est déterminée sur la base du paquet de confirmation reçu.

7. Procédé selon la revendication 6, dans lequel un nombre de paquets de données (12, 12a) de priorité plus haute transférables pendant la fenêtre de transmission (14a, 14b) est calculé sur la base de la durée de transmission déterminée.

8. Procédé selon l'une quelconque des revendications 1 à 7, dans lequel chaque application (16, 18) met en mémoire tampon chaque paquet de données (12, 12a, 12b) dans un tampon de données d'application, de sorte que l'application (16, 18) a un accès complet à chaque paquet de données (12, 12a, 12b) mis en mémoire tampon.

9. Procédé selon l'une quelconque des revendications 1 à 8, dans lequel l'application (16) installée dans l'appareil central (4) agit comme maître et l'application (18) installée dans l'appareil périphérique (8) agit comme esclave.

10. Procédé selon l'une quelconque des revendications 1 à 9, dans lequel l'application (16) agissant comme maître calcule la durée de transmission de paquets de données (12, 12a) de priorité plus haute.
